(19) Europäisches Patentamt
European Patent Office
Office européen des brevets

(11) **EP 2 314 370 B1**

(12) **EUROPEAN PATENT SPECIFICATION**

(45) Date of publication and mention
of the grant of the patent:
**04.09.2013 Bulletin 2013/36**

(51) Int Cl.:
*B01F 5/02* (2006.01)      *B01F 13/00* (2006.01)
*B01F 5/06* (2006.01)      *B01F 13/10* (2006.01)
*B01J 19/00* (2006.01)

(21) Application number: **11154021.7**

(22) Date of filing: **11.07.2007**

(54) **Microfluidic device for immiscible liquid - liquid reactions**

Mikrofluidische Vorrichtung für Reaktionen nicht mischbarer Flüssigkeiten

Dispositif microfluidique pour réactions de liquides immiscibles

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **15.05.2007 EP 07301042**

(43) Date of publication of application:
**27.04.2011 Bulletin 2011/17**

(62) Document number(s) of the earlier application(s) in
accordance with Art. 76 EPC:
**07301224.7 / 1 992 404**

(73) Proprietor: **Corning Incorporated
Corning NY 14831 (US)**

(72) Inventors:
• **Chevalier, Bérengère
65929, Unterliederbach (DE)**
• **Horn, Clemens
91630, Guibeville (FR)**
• **Moreno, Maxime
77710, Saint Ange le Vieil (FR)**
• **Woehl, Pierre
77240, Cesson (FR)**

(74) Representative: **Le Roux, Martine et al
Cabinet Beau de Loménie
158, rue de l'Université
75340 Paris Cedex 07 (FR)**

(56) References cited:
**EP-A- 1 854 536       WO-A-03/066216
US-A- 4 534 659       US-A1- 2003 178 641
US-A1- 2004 027 915**

**Description**

**BACKGROUND OF THE INVENTION**

A principal problem of a reaction in which the reactants comprise or are dissolved in two or more immiscible liquids is achieving the desired amounts or rates of mass transfer between the phases. The present invention relates to microstructured fluidic or microfluidic devices and methods for facilitating such immiscible liquid-liquid reactions.

In the chemical production environment, immiscible liquid/liquid reactions face scale-up issues, particularly where large quantities of reactants are to be processed. Since batch tank volume is typically large, delivering the quantity or density of energy required to create and sustain an emulsion during the needed process period becomes a significant limitation. Maximum achievable baffle speeds limit the deliverable quantity or density of energy. There are two general approaches to overcome this problem.

One general approach is to use additional chemicals as one or more phase transfer catalysts. The disadvantage of use of a phase transfer catalyst (defined herein as including a large molecule with a polar end, like tetraamine salts or sulfonatic acid salts, and a hydrophobic part, typically having long alkyl chains) is the typical necessity of adding the catalyst compound to one of the reactive liquid phases, which, after the reactions are complete, complicates the work-up procedure, which is in general a phase separation.

Another general approach is to achieve a high surface to volume ratio of the liquids within the reactor used for the reaction.

One way to achieve a high surface to volume ratio is to create a stable emulsion. But a stable emulsion also causes difficulties in the following work-up procedures.

A temporary high surface to volume ratio (or unstable emulsion) may be obtained by the injection of droplets. This method has the disadvantage of generally needing a large ratio between the volumes of the injected and host liquids, which typically requires the use of excess liquid.

Other possibilities for making an unstable emulsion are rotor-stators and ultrasonification, both of which have the drawback that they generally have to be specifically adapted to the size of the batch, which becomes more difficult with increasing batch size.

Among other options for creating unstable emulsions, static mixers are often cited in the literature and applied in practice. To enhance emulsification beyond that provided by a single static mixing device, the length of static mixing is increased by placing multiple static mixing devices in series. This configuration is meant to enhance emulsification by adding length to the static mixing zone inside the tubing where the liquids flow. Mixing capacity may be increased over a single static mixer device by use of a parallel configuration of multiple static mixers as in a multitubular reactor.

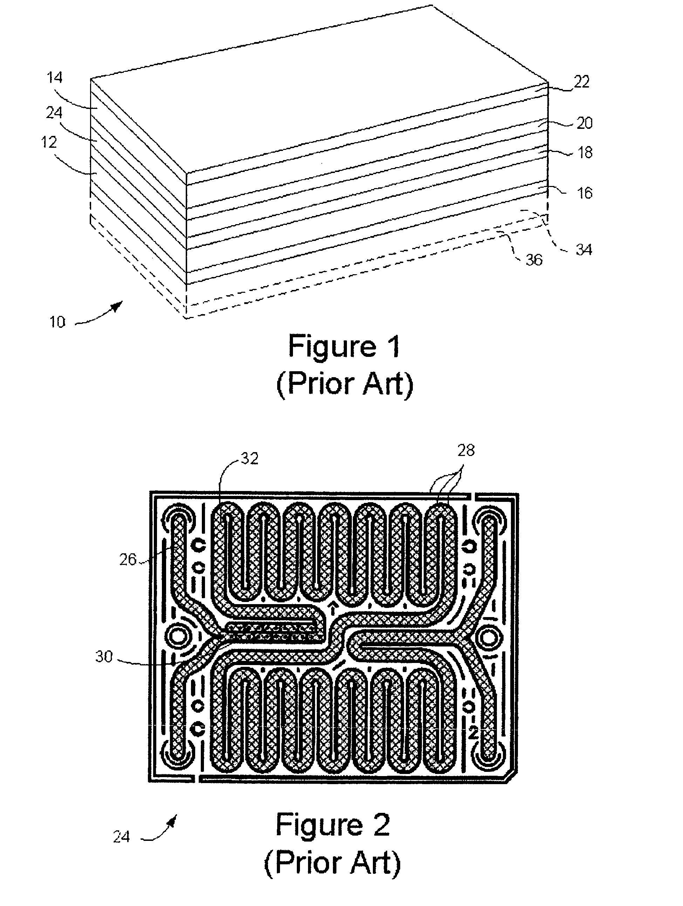

The present inventors and/or their colleagues have previously developed various microfluidic devices of the general form shown in prior art Figure 1. Figure 1, not to scale, is a schematic perspective showing a general layered structure of certain type of microfluidic device. A microfluidic device 10 of the type shown generally comprises at least two volumes 12 and 14 within which is positioned or structured one or more thermal control passages not shown in detail in the figure. The presence of passages for thermal control makes the device a "thermally tempered" device, as that term is used and understood herein. The volume 12 is limited in the vertical direction by horizontal walls 16 and 18, while the volume 14 is limited in the vertical direction by horizontal walls 20 and 22. Additional layers such as additional layer 34 may optionally be provided, bounded by additional walls such as additional wall 36.

Note that the terms "horizontal" and "vertical," as used in this document are relative terms only and indicative of a general relative orientation only, and do not necessarily indicate perpendicularity, and are also used for convenience to refer to orientations used in the figures, which orientations are used as a matter of convention only and not intended as characteristic of the devices shown. The present invention and the embodiments thereof to be described herein may be used in any desired orientation, and horizontal and vertical walls need generally only be intersecting walls, and need not be perpendicular.

A reactant passage 26, partial detail of which is shown in prior art Figure 2, is positioned within the volume 24 between the two central horizontal walls 18 and 20. Figure 2 shows a cross-sectional plan view of the vertical wall structures 28, some of which define the reactant passage 26, at a given cross-sectional level within the volume 24. The reactant passage 26 in Figure 2 is cross-hatched for easy visibility and includes a more narrow, tortuous mixer passage portion 30 followed by a broader, less tortuous dwell time passage portion 32. Close examination of the narrow, tortuous mixer passage portion 30 in Figure 2 will show that the mixer passage portion 30 is discontinuous in the plane of the figure. The fluidic connections between the discontinuous sections of the mixer passage portion shown in the cross section of Figure 1 are provided in a different plane within the volume 24, vertically displaced from plane of the cross-section shown in Figure 2, resulting in a mixer passage portion 30 that is serpentine and three-dimensionally tortuous. The device shown in Figures 1 and 2 and related other embodiments are disclosed in more detail, for example, in European Patent Application No. EP 1 679 115, C. Guermeur et al. (2005). In the device of Figures 1 and 2 and similar devices, the narrow, more tortuous mixer passage portion 30 serves to mix reactants while an immediately subsequent broader, less tortuous dwell time passage portion 32 follows the mixer passage portion 30 and serves to provide a volume in which reactions can be completed while in a relatively controlled thermal environment.

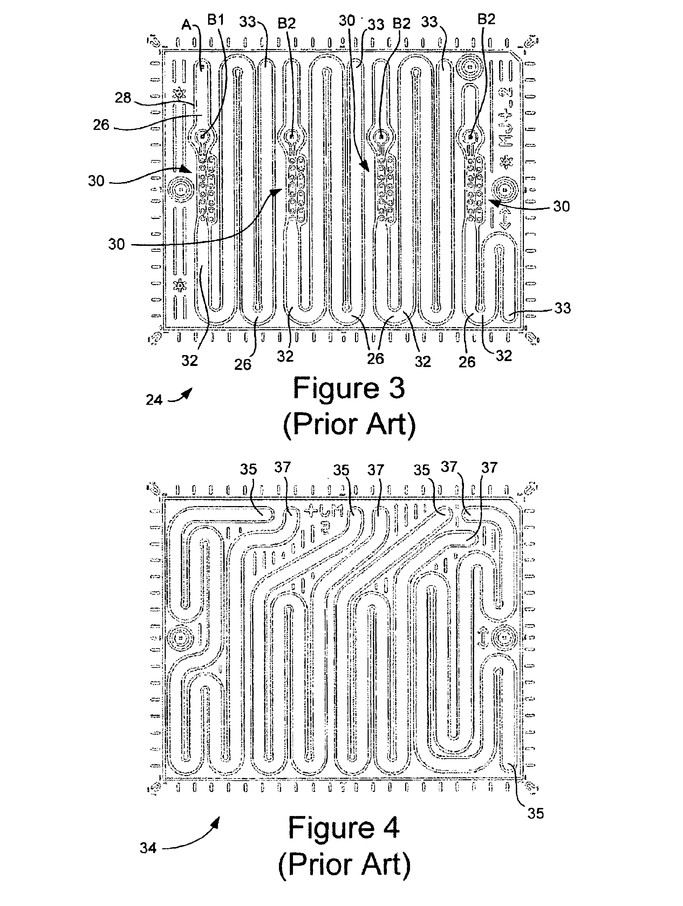

For reactions where increased thermal control is desirable, the present inventors and/or their colleagues have also developed microfluidic devices of the type shown in prior art Figures 3 and 4. Figure 3 shows a cross-sectional plan view of vertical wall structures 28, some of which define a reactant passage 26, at a given cross-sectional level within the volume 24 of Figure 1. Figure 4 shows a cross-sectional plan view of vertical wall structures 28, some of which define additional parts of the reactant passage 26 of Figure 3. The reactant passage 26 of Figure 3 is not contained only within the volume 24, but utilizes also the additional volume 34, shown as optional in Figure 1. The reactant passage 26 of the microfluidic device of Figure 3 includes multiple mixer passage portions 30, each followed by a dwell time passage portion 32. The dwell time passage portions 32 are provided with increased total volume by leaving at locations 33 the layer of volume 24, passing down through horizontal walls 18 and 16 of Figure 1, and entering the additional volume 34 at locations 35 shown in Figure 4, then returning to the layer of volume 24 at locations 37.

The device shown in Figures 3 and 4 and related other embodiments are disclosed in more detail, for example, in European Patent Application No. EP 1 854 536, P. Barthe, et al. (2006). As disclosed therein, in the device of Figures 3 and 4 the designed or preferred mode of operation is to react two reactant streams by flowing the entire volume of one reactant stream into inlet A shown in Figure 3, while dividing the other reactant stream and flowing it into a first inlet B1 and multiple additional inlets B2. This allows the amount of heat generated in each mixer passage portion 30 to be reduced relative to the device of Figure 2, and allows the stoichiometric balance of the reaction to be approached gradually from one side.

Although good performance has been obtained with devices of the types shown above in Figures 1-4, in many cases exceeding the state of the art for tested reactions requiring high heat and mass transfer rates, it has nonetheless become desirous to improve upon the performance of such devices with immiscible liquids.

High surface to volume ratios of immiscible are sometimes obtained by the use of micro channels in the size range of, e.g., 0.25 mm x 0.1 mm, in which the reactants move in a laminar flow. The disadvantage is that such small reaction channels have a small volume, even relative to the devices of Figures 1-4. As a consequence the flow rate is generally low, due to pressure limits and/or in order to provide sufficient reaction time with respect to a given reaction rate, and the production rate is therefore low. Accordingly, it would be desirable to achieve an improved performance with immiscible liquids in devices like those of Figures 1-4 without reducing the overall size and volume, and consequently the production rate, of such devices.

## SUMMARY OF THE INVENTION

According to one aspect, methods of contacting two or more immiscible liquids are described which comprise (1) providing a unitary thermally-tempered microstructured fluidic device comprising a reactant passage therein with characteristic cross-sectional diameter in the 0.2 millimeter to 15 millimeter range, having, in order along a length thereof, two or more inlets for entry of reactants, an initial mixer passage portion characterized by having a form or structure that induces a degree of mixing in fluids passing therethrough, an initial dwell time passage portion characterized by having a volume of at least 0.1 milliliter and a generally smooth and continuous form or structure and one or more additional mixer passage portions, each additional mixer passage portion followed immediately by a corresponding respective additional dwell time passage portion; and (2) flowing the two or more immiscible fluids through the reactant passage, wherein the two or more immiscible fluids are flowed into the two or more inlets such that the total flow of the two or more immiscible fluids flows through the initial mixer passage portion.

According to another aspect, unitary devices in which the method may be performed are also disclosed.

One such embodiment comprises a unitary thermally tempered microstructured fluidic device having a reactant passage therein with characteristic cross-sectional diameter in the 0.2 millimeter to 15 millimeter range and having in order along a length of the reactant passage: (1) two or more inlets for entry of reactants (2) an initial mixer passage portion characterized by having a form or structure that induces a degree of mixing in fluids passing therethrough (3) an initial dwell time passage portion characterized by having a volume of at least 0.1 milliliter and a generally smooth and continuous form or structure that generally maximizes the available volume within the passage relative to the available volume within the device and (4) one or more respective stabilizer passage portions, each stabilizer passage portion characterized by having a form or structure that induces a degree of mixing in fluids passing therethrough, each stabilizer passage portion followed immediately by a corresponding respective additional dwell time passage portion.

Another such embodiment comprises a unitary thermally tempered microstructured fluidic device having a reactant passage therein with characteristic cross-sectional diameter in the 0.2 millimeter to 15 millimeter range, the passage having, in order along a length thereof: (1) two or more inlets for entry of reactants (2) an initial mixing passage portion characterized by having a form or structure that induces a degree of mixing and a first degree of pressure drop in fluids passing therethrough (3) an initial dwell time passage portion characterized by having a volume of at least 0.1 milliliter and a generally smooth and continuous form or structure that generally maximizes the available volume within the passage relative to the available volume within the device (4) one or more respective stabilizer passage portions, each stabilizer passage portion characterized by having a form or structure that induces a degree of mixing and a second degree of pressure drop in fluids passing therethrough, the second degree of pressure drop being less than the first degree, each stabilizer passage portion followed immediately by a corresponding respective additional dwell time passage portion.

The invention is defined by the features of claim 1.

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

It is to be understood that both the foregoing general description and the following detailed description present embodiments of the invention, and are intended to provide an overview or framework for understanding the nature and character of the invention as it is claimed. The accompanying drawings are included to provide a further understanding of the invention, and are incorporated into and constitute a part of this specification. The drawings illustrate various embodiments of the invention, and together with the description serve to explain the principles and operations of the invention.

## BRIEF DESCRIPTION OF THE DRAWINGS

Figure 1 (prior art) is a schematic perspective showing a general layered structure of certain prior art microfluidic devices;

Figure 2 (prior art) is a cross-sectional plan view of vertical wall structures within the volume 24 of Figure 1;

Figure 3 (prior art) is an alternative cross-sectional plan view of vertical wall structures within the volume 24 of Figure 1;

Figure 4 (prior art) is a cross-sectional plan view of vertical wall structures within the optional volume 34 of Figure 1:

Figure 5 is a schematic diagram showing the flow of reactants according to the described methods as well as the generalized flow path of the devices of the present invention;

Figure 6 is a cross-sectional plan view of vertical wall structures within the volume 24 of Figure 1 according to one embodiment of a described device;

Figure 7 is a cross-sectional plan view of vertical wall structures within the volume 24 of Figure 1 according to another embodiment of a described device;

Figure 8 is a cross-sectional plan view of vertical wall structures within the volume 24 of Figure 1 of a device used for testing of the described methods;

Figure 9 is a graph showing percentage yield as a function of number of stabilizers;

Figure 10 is a graph showing yield percentage of a test reaction as a function of pressure drop in Bar in one comparative device, and in two devices used according the described methods, and in two inventive devices used according to the described methods.

Figures 11 and 12 are graphs showing theoretical numerical calculation of the effect of the number of mixing and/or mixing and stabilizer zones on radius of droplets and pressure drop for two different immiscible fluid pairs.

## DETAILED DESCRIPTION OF THE PREFERRED EMBODIMENTS

Reference will now be made in detail to the presently preferred embodiments, examples of which are illustrated in the accompanying drawings. Whenever possible, the same reference numerals will be used throughout the drawings to refer to the same or like parts.

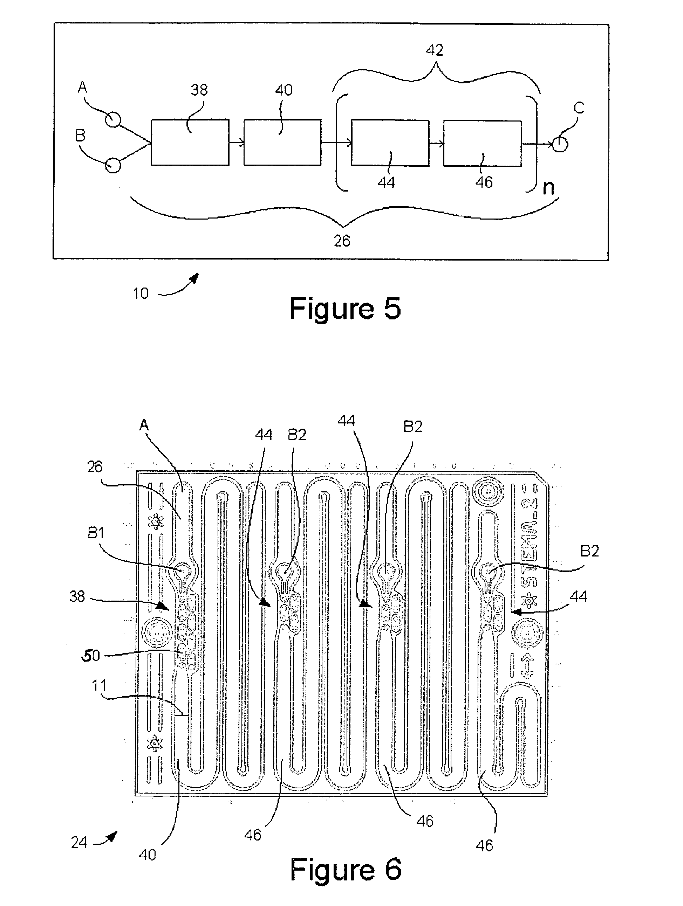

Figure 5 is a schematic diagram showing the flow of reactants according to the described methods as well as the generalized flow path within a unitary microstructured fluidic device 10 according to the present invention. Two or more immiscible fluids comprising two or more reactants are fed into two or more inlets A and B to a reactant passage 26 within the unitary microstructured fluidic device 10. The reactant passage desirably has characteristic cross-sectional diameter in the 0.2 millimeter to 15 millimeter range and has, in order along a length thereof, the two or more inlets A and B for entry of reactants, an initial mixer passage portion 38 characterized by having a form or structure that induces a degree of mixing in fluids passing therethrough, an initial dwell time passage portion 40 characterized by having a volume of at least 0.1 milliliter and a generally smooth and continuous form or structure that generally maximizes the available volume within the passage relative to the available volume within the device, and one or more additional mixer passage portions 44, each additional mixer passage portion followed immediately by a corresponding respective additional dwell time passage portion 46. In other words, as represented in Figure 5, the additional mixer passage portion together with the associated corresponding additional dwell time passage portion 46 represent a unit 42 that is repeated n times, where n is a positive integer. Fluids exit the device 10 at outlet C.

By "unitary" is understood herein a device that is structured and arranged such that the device is generally not understood to be capable of non-destructive disassembly. Some examples include glass, glass-ceramic, and ceramic microstructured devices prepared according to the methods developed by the present inventors and/or their colleagues and disclosed for example in U.S. Patent No. 7,007,709, G. Guzman et al., 2006. Such materials and methods are useful in the context of the present invention.

The method and the microstructured fluidic device represented by Figure 5 incorporate two important aspects of reaction in an immiscible fluid media, emulsification and reaction time. The layout guarantees both high surface/volume ratio-provided by the initial mixer passage portion 38 and the one or more additional mixer passage portions 44-and significantly large internal volume-provided by the generally straight channels of the dwell time passage portions 40 and 46 between the spaced mixer zones. Toward the end of providing large internal volume, the initial dwell time passage portion desirably has a volume of at least 0.1 milliliter, more desirably of at least 0.3 milliliter. The one or more additional dwell time passage portions may desirably have about the same volume as the initial one, but it is not necessary that they all be the same volume.

The alternation of mixer or emulsification zones and dwell time or reaction zones provides the volume needed for the reaction time, which is generally not the case in a microstructure that contains only a long, narrow and tortuous emulsification zone. Such a long emulsification zone has the disadvantage of a small volume, which represents a short reaction time.

It will be appreciated that methods represented by the diagram of Figure 5 may optionally be practiced in the prior art device of Figures 3 and 4, by flowing the two or more immiscible fluids all into the two or more inlets A and B1, rather than into any of the secondary additional inlets B2, such that the total flow of the two or more immiscible fluids flows through the initial mixer passage portion 30. To avoid having to plug or cap the additional inlets B2, it may be desirable to use a device having a reactant passage without additional inlets after the initial dwell time passage portion.

Almost for all micromixer designs, the higher the flowrate, the better the quality of the emulsion is obtained. The devices of the present invention have the advantage of using high flowrate while still keeping the residence time compatible with the reaction time required by the reaction kinetics.

One presently preferred embodiment of a device according to the present invention is shown in Figure 6, which is a cross section of wall structures useful in volume 24 of Figure 1. Note that the structures of Figure 6 are intended for use with the structures shown in Figure 4, resulting in increased dwell time passage volume in the same manner as discussed above for Figures 3 and 4.

As in the schematic diagram of Figure 5, in the device of Figure 6, two or more immiscible fluids comprising two or more reactants are fed into two or more inlets A and B1 to a reactant passage 26 within the unitary microstructured fluidic device (a device 10 of the type shown generally in Figure 1). The reactant passage 26 desirably has characteristic cross-sectional diameter 11 in the 0.2 millimeter to 15 millimeter range and has, in order along a length thereof, the two or more inlets A and B1 for entry of reactants, an initial mixer passage portion 38 characterized by having a form or structure that induces a degree of mixing in fluids passing therethrough, an initial dwell time passage portion 40 characterized by having a volume of at least 0.1 milliliter and a generally smooth and continuous form or structure that generally maximizes the available volume within the passage relative to the available volume within the device, and one or more additional mixer passage portions 44, each additional mixer passage portion followed immediately by a corresponding respective additional dwell time passage portion 46.

The method and the microstructured fluictic device represented by Figure 6 likewise incorporate two important aspects of reaction in an immiscible fluid media, emulsification and reaction time. The layout guarantees both high surface/volume ratio-provided by the initial mixer passage portion 38 and the one or more additional mixer passage portions 44-and significantly large internal volume-provided by the generally straight channels of the dwell time passage portions 40 and 46 between the spaced mixer zones, and by the additional dwell time passage volume provided within the structure of Figure 4. Toward the end of providing large internal volume, the initial dwell time passage portion 40 desirably has a volume of at least 0.1 milliliter, more desirably of at least 0.3 milliliter. The additional dwell time passage portions 46 are desirably similar in volume, but need not be identical to the initial one 40 or to each other.

In the device of Figure 6, the additional mixers 44 are structured so as to induce a lesser degree of pressure drop than the initial mixer passage portion 38. That is, additional mixer passage portions 44, assuming they are supplied with the same fluid at the same pressure and flow rate as the initial mixer passage portion 38, are structured and arranged so as to produce a lesser pressure drop than that produced by the initial mixer passage portion 38. In the embodiment of Figure 6, the additional mixers 44 are shorter than the initial mixer 38 and have fewer mixing elements 50 along their length. Thus the additional mixers serve in a sense more as stabilizers than mixers, and the usage of these stabilizers instead of full length mixers result in significantly reduced pressure drop for the reactant passage as a whole. As discussed above with respect to the use of the device of Figure 3 in the described methods, additional inlets B2 are not used, but are available for methods outside the scope of this invention.

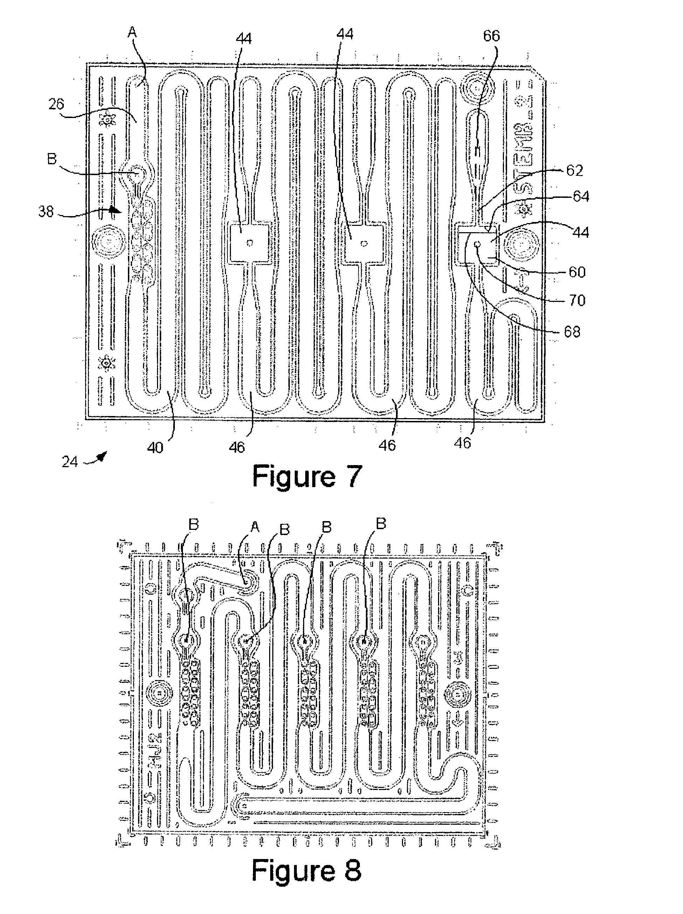

Figure 7 is a cross-sectional plan view of vertical wall structures within the volume 24 of Figure 1 according to another embodiment of a device of the present invention. Note that, in the same manner as the structures of Figure 6, the structures of Figure 7 are intended for use with the structures shown in Figure 4, resulting in increased dwell time passage volume in the same manner as discussed above for Figures 3 and 4.

In contrast with the structure of Figure 6, no additional inlets are provided in the embodiment shown in Figure 7. While the initial mixer 38 of this embodiment is in the form of a narrow, tortuous passage portion, the additional mixers or stabilizers 44 of this embodiment are in the form of chambers structured and configured so as to produce, at the flow rates useful in the structure, a self-sustaining oscillating jet. The self-sustaining oscillating jet stabilizers 44 of Figure 7 generate even less pressure drop than the stabilizers 44 of Figure 6, and maintain the emulsion almost as well.

The self-sustaining oscillating jet stabilizers 44 of Figure 7 are each configured in the form of chamber 60 having one (or optionally more separate) feed channel(s) 62, each of the one or more feed channels 62 entering the chamber 60 at a common wall 64 of the chamber 60, the one or more separate feed channels 62 having a total channel width 66 comprising the widths of the one or more separate channels 62 and all inter-channel walls, if any, taken together, the chamber 60 having a width 68 in a direction perpendicular to the one or more channels 62 of at least two times the total channel width 66. The chamber 60 may also include one or more posts 70 that may serve to increase the pressure resistance of the otherwise relatively large open chamber.

Experimental

An amidation reaction was used as test reaction. The test procedure was the following: 1.682 g (0.01 mol) of 2-phenylacetic chloride (1) was dissolved in 1 L of dry ethyl acetate or toluene. 1-phenylethylamin (1.212 g, 0.01 mol) was dissolved in 1 L of 0.1 N sodium hydroxide solution. The two immiscible solutions were pumped with a constant ratio of 1:1 through the reactor with various flow rates at room temperature. The reaction was quenched at the exit of the reactor by collecting the liquids in a beaker containing a IN acid chloride solution. The organic phase was separated, dried and injected into a gas chromatograph for analysis.

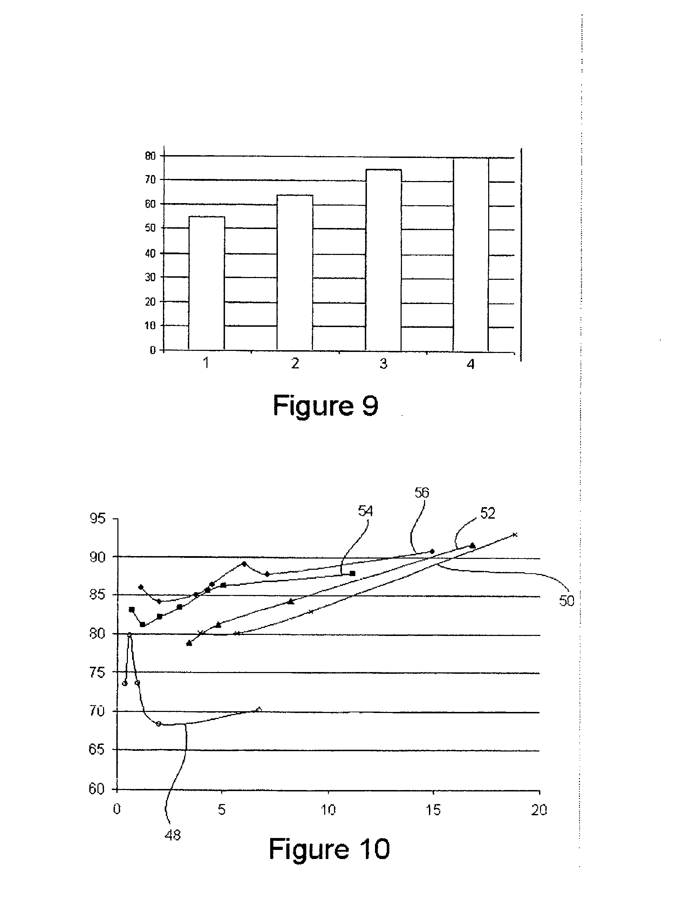

The order of injection was not important; switching the inlets used for organic and aqueous phases did not have an impact on the yield. One reactant was injected at the inlet A of test a structure like that shown in Figure 8, the other was injected at a selected one of the inlets B, depending on the desired number of total mixer plus dwell time or reaction zones for the given test. The flow rate was adjusted to limit the range of variation in residence time 1.1 to 1.5 seconds. The results are graphed in Figure 9, in percentage yield as a function of emulsification zones (mixer zones after the first). As may be seen from the figure, more emulsification zones gave a higher yield. In the case of this particular reaction the best performing number of emulsification or mixer zones after the first was four (4), the maximum available from the test device. The same reaction performed in a round bottom flask (100 ml, room temperature, 3 min, 600 rpm magnetic stirrer) gave, as a reference value, a yield of 55.6%.

Figure 10 shows the yield percentage as a function of the pressure drop in bar produced at various flow rates (not shown) for one comparative method/device (trace 48) and four applications of the described methods (traces 50-56). The comparative device, trace 48, is the device of Figure 2, having a single mixer passage portion and a single dwell time passage portion following. The remaining traces 50-56 were all produced by methods including feeding all the reactants through multiple mixer passage portions each with an immediately following dwell time passage portion.

Trace 50 shows the yield results from the a device like that of Figure 3, used as described in the described methods, while trace 52 shows results from the device of Figure 8, with an added dwell time structure appended at the exit of the device. In both trace 50 and 52, the subsequent mixers have the same length and number of mixing elements as the initial mixer. In contrast to this are the traces 54 and 56. Trace 54 is from the device of Figure 7, while trace 56 is from the device of Figure 6. Both trace 54 and 56 show the superiority of the preferred structures of the present invention in which the mixers or emulsifiers or stabilizers downstream of the initial mixer are shorter or otherwise less intensive (lower pressure drop) than the initial mixer. As shown in the traces 54 and 56, high yields at relatively low pressures were the result.

Design Theory and Analysis

To give an illustration of how the design principles and methods described herein can be used and adapted to a specific chemical reaction case, we propose the following simple analysis of a reaction system, without intending to be bound thereby. The optimal number $N$ of total mixing and/or emulsification elements is considered as the variable for the analysis and calculated to find the trade-off between (i) pressure drop, (ii) total volume of the reactor to provide sufficient reaction time and (iii) the maximum diameter of the droplet in the dispersed phase of the emulsion.

The notations used are the following: $\gamma$ interfacial tension, $\rho$ density of the mixture, $S$ solubility of the dispersed phase in the continuous medium, $D$ diffusion coefficient, $R$ gas molar constant, $T$ temperature, $V$ total volume of the reactor, $V_m$ volume of one emulsification element, $V_{DT}$ volume of one straight segment, $\Delta P_m$ the pressure drop in one emulsification element, and $Q$ total volumetric flowrate.

The emulsion is created by shear stress in each emulsification element and we can take the following equation to assess the energy dissipated $E_m$ in this process for the entire reactor, which is independent of the number of emulsification elements but depends only on the design of one single unit:

$$E_m = \frac{Q}{\rho} \frac{N\Delta P_m}{V} \simeq \frac{Q}{\rho} \frac{N\Delta P_m}{N(V_m + V_{DT})} = \frac{Q}{\rho} \frac{\Delta P_m}{(V_m + V_{DT})} \qquad (1)$$

The maximum diameter $d_{max}$ of the droplets in the dispersed phase can then be assessed by:

$$d_{max} \propto E_m^{-0.4} \left(\frac{\rho}{\gamma}\right)^{-0.6} = \left(\frac{\gamma}{\rho}\right)^{0.6} \left(\frac{\rho V_m}{Q\Delta P_m}\right)^{0.4} \qquad (2)$$

Once this diameter has been assessed, the <u>time of stability of the emulsion</u> can be evaluated to give an order of magnitude for the desirable volume of the straight channels. For the simplicity of the demonstration, we can assume that destabilization of the emulsion follows a <u>maturing</u> process (although other mechanisms could be envisaged, such as coalescence). For such a process, the radiuses of the droplets scale as:

$$r^4 = r_0^4 + kt \qquad (3)$$

where $k$ is a constant defined by the mixture properties:

$$k = \frac{32\gamma V_m SD}{9RT} \qquad (4)$$

The radius of the droplet at the outlet of one emulsification element can be taken as $d_{max}/2$, if we want to minimize the size of the droplets in the reactor. The <u>pressure drop</u> created in the reactor may be written

$$\Delta P = N(\Delta P_m + \Delta P_{DT}) \qquad (5)$$

and <u>total volume</u> may be written $V=N(V_m + V_{DT})$, which is approximately equal to $V=N\cdot V_{DT}$ if the volume of the emulsification element is neglected. This enables us to calculate the total residence time $\tau=V/Q$.

For given reaction and process conditions, the flowrate $Q$ and the total residence time needed $\tau$ are set. If we also assume the design of an emulsification element is defined, then all parameters are set except the number of these elements $N$. This number will be defined by addressing the two following criteria: (i) the radiuses at the entrance of any emulsification element should be minimized (i.e., at the outlet of the previous straight channel) (ii) pressure drop should be minimized. Such a condition allows us to write, following the preceding equations ($r_0$, $k$, $\tau$, $\Delta P_m$ and $\Delta P_{DT}$ being constant for a given optimization case):

$$\begin{cases} r^4 = r_0^4 + \dfrac{k\tau}{N} \\ \Delta P = N(\Delta P_m + \Delta P_{DT}) \end{cases} \qquad (6)$$

where both $r$ and $\Delta P$ have to be minimized with respect to $N$.

Numerical example

We have chosen the two systems taken in the reported data for the numerical example, namely ethyl-acetate (C4H802)-water and toluene (C7H8)-water systems:

*Table 1: Fluid properties of two specific examples (20°C)*

|  | Ethyl Acetate / water | Toluene / water |
|---|---|---|
| $\gamma$ (mN/m) | 48.6 | 44.3 |
| $\rho$ (kg/m$^3$) | 866 | 845 |
| S (mol/m$^3$) | 918 | 6.85 |
| D (m$^2$/s) | 1e-9 | 0.85e-9 |

We take the following assumptions for the reactor and reaction/process conditions:

Q=150 ml/min
$\Delta P_m$=0.3 bar *(dependent on solvent viscosity, but kept constant here for simplicity)*
$\Delta P_{DT}$=0.15 bar *(dependent on solvent viscosity, but kept constant here for simplicity)*
$V_m$=0.1ml
$\tau$=20 s

This leads to the following result:

*Table 2: Result for two specific examples (20°C)*

|  | Ethyl Acetate / water | Toluene / water |
|---|---|---|
| $r_0$ ($\mu$m) | 94 | 89 |
| k (m$^4$.s$^{-1}$) | 6.40E-18 | 3.70E-20 |

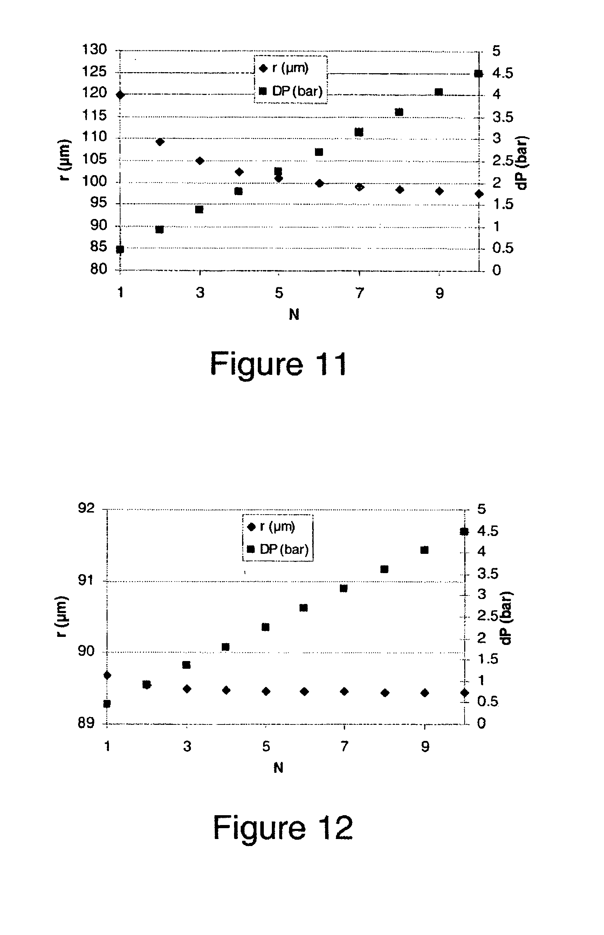

Values reported above are large and correspond to poor stability of the emulsion, which is why we need to implement our disclosure in this case. Figures 11 and 12 show the final results of this analysis on the simple model used to generate the data reported in this disclosure. Figure 11 shows the results for Ethyl Acetate and water, wherein most of the droplet radius reduction has occurred by the fourth or fifth stabilizer. In contrast, Figure 12 shows that most of the droplet radius reduction occurs already after only one or two stabilizers. This shows that applying the principle of design described in this disclosure, an optimal can be found, and that the value of this optimal depends on the reaction.

Another simple estimation of orders of magnitude will show that the inventive <u>integrated</u> approach described in this disclosure leads to efficient prevention of coalescence. In shear driven coalescence of droplets in a viscous continuous phase, the value for the maximum radius $R$ of coalesced droplets can be assessed with several models; one of these models (Immobile Interface approach) gives:

$$R \simeq \left(\frac{8}{9}\right)^{1/4} h_c^{1/2} \left(\frac{\tau}{\gamma}\right)^{-1/2} \qquad (7)$$

with $h_c$ the critical film thickness for drainage between two droplets, $\tau$ the shear rate, $\eta_m$ the dynamic viscosity of the continuous liquid phase.
For a cylindrical tube of diameter $D$, the shear stress $\tau$ at radius $r$ is given by:

$$\tau = 64r \frac{\eta_m Q}{\pi D^4} \qquad (8)$$

Hence, the volume fraction of liquid under a shear rate leading to a maximum coalescence radius $R_c$ is given by:

$$f = \frac{h_c^2 \gamma^2 \pi^2 D^6}{1152 \eta_m^2 Q^2 R_c^4} \qquad (9)$$

This number is clearly highly dependent on internal diameter of the tube and therefore explains why achieving small dimensions between two stabilizers is of prime importance.

The same analysis can be done with a channel with rectangular cross-section. It is demonstrated that the aspect ratio is the key factor to provide sufficient shear for a given volume of microchannel. The details for the calculation of the shear rate can be found in P.-S. Lee & S.V. Garimella, Thermally developing flow and heat transfer in rectangular microchannels of different aspect ratios, International Journal of Heat and Mass Transfer, vol. 49, pp. 3060-3067, 2006.

## Claims

1. A unitary thermally tempered microstructured fluidic device (10) comprising a reactant passage (26) therein with characteristic cross-sectional diameter in the 0.2 millimeter to 15 millimeter range, having, in order along a length thereof, two or more inlets (A,B) for entry of reactants, an initial mixing passage portion (38) having a form or structure that induces a degree of mixing and a first degree of pressure drop in fluids passing therethrough; an initial dwell time passage portion (40) having a volume of at least 0.1 milliliter and a generally smooth and continuous form or structure that generally maximizes the available volume within the passage (26) relative to the available volume within the device (10) ; and wherein the device (10) further comprises, along said fluidic passage (26), after the initial dwell time passage portion (40), one or more respective stabilizer passage portions (44), each stabilizer passage portion (44) having a form or structure that induces a degree of mixing and a second degree of pressure drop in fluids passing therethrough, the second degree of pressure drop being less than the first degree, each stabilizer passage portion (44) followed immediately by a corresponding respective additional dwell time passage portion (46).

2. The microstructured fluidic device (10) of claim 1 wherein the initial dwell time passage portion (40) is **characterized by** having a volume of at least 0.3 milliliter.

3. The microstructured fluidic device (10) according to either claim 1 or claim 2 wherein no inlets are provided to the reactant passage (26) on the downstream side of the initial mixing passage portion (38).

4. The microstructured fluidic device (10) according to any of claims 1-3, wherein the initial mixer passage portion (38) comprises a narrow tortuous passage portion having a first length, and the one or more stabilizer passage portions (44) each comprise a narrow tortuous passage portion having a length less than said first length.

5. The microstructured fluidic device (10) according to any of claims 1-3, wherein the initial mixer passage portion (38) comprises a first number of mixer elements (50), and the one or more stabilizer passage portions (44) each comprise a number of mixer elements (50) less than said first number.

6. The microstructured fluidic device (10) according to either of claims 1 and 2, wherein the initial mixer passage portion (38) comprises a narrow tortuous passage portion and at least one of the one or more stabilizer passage portions (44) comprises a self-sustaining oscillating jet chamber (60) having one or more separate feed channels (62), each of the one or more channels (62) entering the chamber (60) at a common wall (64) of the chamber (60), the one or more separate channels (62) having a total channel width (66) comprising the widths of the one or more separate channels (62) and all inter-channel walls, if any, taken together, the chamber (60) having a width (68) in a direction perpendicular to the one or more channels (62) of at least two times the total channel width (66).

## Patentansprüche

1. Zusammenhängende thermisch angelassene mikrostrukturierte fluidische Vorrichtung (10), die darin einen Durchgang (26) für Reaktionssubstanzen mit einem charakteristischen Querschnittsdurchmesser im Bereich von 0,2 Millimetern bis 15 Millimetern umfaßt, der in der Reihenfolge entlang einer Länge desselben zwei oder mehr Einlässe (A, B) für den Einlauf der Reaktionssubstanzen, einen Anfangsmischerdurchgangsabschnitt (38), der eine Form oder Struktur aufweist, die ein Maß an Durchmischung und ein erstes Maß an Druckabfall in dadurch fließenden Fluiden induziert, einen Anfangsverweilzeitdurchgangsabschnitt (40), der ein Volumen von wenigstens 0,1 Millilitern und eine im allgemeinen glatte und durchgehende Form oder Struktur aufweist, die im allgemeinen das verfügbare Volumen im Durchgang (26) relativ zum verfügbaren Volumen in der Vorrichtung (10) maximiert, und wobei die Vorrichtung (10) ferner entlang des fluidischen Durchgangs (26) nach dem Anfangsverweilzeitdurchgangsabschnitt (40) einen oder mehrere entsprechende Stabilisatordurchgangsabschnitte (44) umfaßt, wobei jeder Stabilisatordurchgangsabschnitt (44) eine Form oder Struktur aufweist, die ein Maß an Durchmischung und ein zweites Maß an Druckabfall in dadurch fließenden Fluiden induziert, wobei das zweite Maß an Druckabfall geringer ist als das erste Maß, wobei auf jeden Stabilisatordurchgangsabschnitt (44) unmittelbar ein entsprechender jeweiliger Zusatzverweilzeitdurchgangsabschnitt (46) folgt,

2. Mikrostrukturierte fluidische Vorrichtung (10) nach Anspruch 1, wobei der Anfangsverweilzeitdurchgangsabschnitt (40) **dadurch gekennzeichnet ist, daß** er ein Volumen von wenigstens 0,3 Millilitern aufweist.

3. Mikrostrukturierte fluidische Vorrichtung (10) nach Anspruch 1 oder 2, wobei für den Durchgang (26) für Reaktionssubstanzen auf der Abstromseite des Anfangsmischerdurchgangsabschnitts (38) keine Einlässe vorgesehen sind.

4. Mikrostrukturierte fluidische Vorrichtung (10) nach einem der Ansprüche 1 bis 3, wobei der Anfangsmischerdurchgangsabschnitt (38) einen engen gewundenen Durchgangsabschnitt umfaßt, der eine erste Länge aufweist, und der eine oder die mehreren Stabilisatordurchgangsabschnitte (44) jeweils einen engen gewundenen Durchgangsabschnitt aufweisen, der eine Länge aufweist, die kleiner ist als die erste Länge.

5. Mikrostrukturierte fluidische Vorrichtung (10) nach einem der Ansprüche 1 bis 3, wobei der Anfangsmischerdurchgangsabschnitt (38) eine erste Anzahl von Mischerelementen (50) umfaßt und der eine oder die mehreren Stabilisatordurchgangsabschnitte (44) jeweils eine Anzahl von Mischerelementen (50) umfassen, die kleiner als die erste Anzahl ist.

6. Mikrostrukturierte fluidische Vorrichtung (10) nach Anspruch 1 oder 2, wobei der Anfangsmischerdurchgangsabschnitt (38) einen engen gewundenen Durchgangsabschnitt umfaßt und wenigstens einer des einen oder der mehreren Stabilisatordurchgangsabschnitte (44) eine Strahlkammer mit selbsterhaltender Oszillation (60) umfaßt, die einen oder mehrere separate Zufuhrkanäle (62) aufweist, wobei jeder des einen oder der mehreren Kanäle (62) in die Kammer (60) an einer gemeinsamen Wand (64) der Kammer (60) einmündet, wobei der eine oder die mehreren separaten Kanäle (62) eine Gesamtkanalweite (66) aufweisen, die die Weiten des einen oder der mehreren separaten Kanäle (62) und alle Zwischenkanalwände, falls vorhanden, zusammen umfaßt, wobei die Kammer (60) eine Weite (68) in einer Richtung senkrecht zu dem einen oder den mehreren Kanälen (69) von wenigstens dem Doppelten der Gesamtkanalweite (66) aufweist.

**Revendications**

1. Dispositif fluidique microstructuré unitaire (10) thermiquement tempéré comprenant un passage à agent réactif (26) à l'intérieur avec un diamètre de section transversale caractéristique dans la plage de 0,2 mm à 15 mm, ayant, dans l'ordre le long de sa longueur, deux ou plus de deux entrées (A, B) pour l'entrée d'agents réactifs, une portion de passage de mélange initiale (38) présentant une forme ou structure qui induit un degré de mélange et un premier degré de chute de pression pour les fluides passant à travers celle-ci ; une portion de passage de séjour initiale (40) ayant un volume d'au moins 0,1 ml et une forme ou structure généralement lisse et continue qui généralement maximalise le volume disponible dans le passage (26) relativement au volume disponible dans le dispositif (10) ; ledit dispositif (10) comprenant en outre, le long dudit passage fluidique (26), après la portion de passage de séjour initiale (40), une ou plusieurs portions de passage de stabilisation respectives (44), chaque portion de passage de stabilisation (44) ayant une forme ou structure qui induit un degré de mélange et un second degré de chute de pression pour les fluides passant à travers celle-ci, le second degré de chute de pression étant inférieur au premier degré de chute de pression, chaque portion de passage de stabilisation (44) étant suivie immédiatement par une portion de passage de séjour additionnelle respective correspondante (46).

2. Dispositif fluidique microstructuré selon la revendication 1, dans lequel la portion de passage de séjour initiale (40) est **caractérisée par** un volume d'au moins 0,3 ml.

**3.** Dispositif fluidique microstructuré selon l'une des revendications 1 ou 2, dans lequel il n'est prévu aucune entrée vers le passage à agent réactif (26) sur le côté aval de la portion de passage de mélange initiale (38).

**4.** Dispositif fluidique microstructuré selon l'une des revendications 1 à 3, dans lequel la portion de passage de mélange initiale (38) comprend une portion de passage étroite et tortueuse ayant une première longueur, et lesdites une ou plusieurs portions de passage de stabilisation (44) comprennent chacune une portion de passage étroite et tortueuse ayant une longueur inférieure à ladite première longueur.

**5.** Dispositif fluidique microstructuré selon l'une des revendications 1 à 3, dans lequel la portion de passage de mélange initiale (38) comprend un premier nombre d'éléments de mélange (50) et lesdites une ou plusieurs portions de passage de stabilisation (44) comprennent chacune un nombre d'éléments de mélange (50) inférieur audit premier nombre.

**6.** Dispositif fluidique microstructuré (10) selon l'une des revendications 1 ou 2, dans lequel la portion de passage de mélange initiale (38) comprend une portion de passage étroite et tortueuse et l'une au moins desdites une ou plusieurs portions de passage de stabilisation (44) comprend une chambre à jet oscillant auto-entretenu (60) ayant un ou plusieurs canaux d'alimentation séparés (62), chacun desdits un ou plusieurs canaux (62) entrant dans la chambre (60) au niveau d'une paroi commune (64) de la chambre (60), lesdits un ou plusieurs canaux séparés (62) ayant une largeur totale (66) qui comprend les largeurs des un ou plusieurs canaux séparés (62) et, si applicable, toutes les parois intermédiaires entre les canaux, prises ensemble, la chambre (60) ayant une largeur (68), dans une direction perpendiculaire auxdits un ou plusieurs canaux (69) qui est au moins deux fois la largeur totale (66) des canaux.

Figure 1
(Prior Art)

Figure 2
(Prior Art)

## Figure 3
## (Prior Art)

## Figure 4
## (Prior Art)

Figure 5

Figure 6

Figure 7

Figure 8

Figure 9

Figure 10

Figure 11

Figure 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1679115 A, C. Guermeur
- EP 1854536 A, P. Barthe

- US 7007709 B, G. Guzman

**Non-patent literature cited in the description**

- **P.-S. LEE ; V. GARIMELLA.** Thermally developing flow and heat transfer in rectangular microchannels of different aspect ratios. *International Journal of Heat and Mass Transfer,* 2006, vol. 49, 3060-3067